(19) Europäisches Patentamt
European Patent Office
Office européen des brevets

(11) **EP 4 667 171 A1**

(12) **EUROPEAN PATENT APPLICATION**

(43) Date of publication:
**24.12.2025 Bulletin 2025/52**

(21) Application number: 25178294.2

(22) Date of filing: **22.05.2025**

(51) International Patent Classification (IPC):
***B25J 15/06*** *(2006.01)* ***B65G 47/91*** *(2006.01)*

(52) Cooperative Patent Classification (CPC):
**B25J 15/0616; B25J 15/0625; H01M 4/04;
H01M 10/04**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **21.06.2024 KR 20240081243**

(71) Applicant: **SAMSUNG SDI CO., LTD.
Yongin-si, Gyeonggi-do 17084 (KR)**

(72) Inventors:
• **Kang, Jeongho
17084 Yongin-si (KR)**
• **Cho, Seong Bong
17084 Yongin-si (KR)**

(74) Representative: **Marks & Clerk LLP
15 Fetter Lane
London EC4A 1BW (GB)**

(54) **ELECTRODE PLATE ABSORPTION DEVICE**

(57)    A pressure control module includes a vacuum tank connected to a vacuum generator, the vacuum tank being configured to have a pressure therein maintained by the vacuum generator, and a control valve connected to the vacuum tank, the control valve being configured to control via the vacuum tank a pressure of a vacuum pad that absorbs an electrode plate.

100

FIG. 1

EP 4 667 171 A1

## Description

### BACKGROUND

#### 1. Field

Aspects of embodiments of the present disclosure relate to an electrode plate absorption device, and more particularly, to an electrode plate absorption device including a vacuum generator and a vacuum tank.

#### 2. Description of Related Art

Recently, interest in high-capacity secondary batteries as well as low-capacity batteries is increasing, while using small electronic devices such as mobile devices and replacing internal combustion engines that use fossil fuels. A stack-type secondary battery is configured to include an electrode plate stack structure in which a positive electrode plate and a negative electrode plate are laminated with a separator therebetween. The capacity of a secondary battery is determined by the number of laminated electrode plates.

The above information disclosed in this Background section is for enhancement of understanding of the background of the present disclosure, and therefore, it may contain information that does not constitute related (or prior) art.

### SUMMARY

A pressure control module (160) according to an embodiment of the present disclosure includes a vacuum tank (130) connected to a vacuum generator (110) and having a pressure maintained by the vacuum generator (110), and a control valve (140) connected to the vacuum tank (110), wherein the control valve (140) uses the vacuum tank (130) to control a pressure of a vacuum pad (150) that absorbs a secondary battery electrode plate.

In an embodiment, the control valve (140) is connected to an opening through which purge air is introduced.

In an embodiment, the control valve (140) controls the pressure of the vacuum pad (150) by selectively connecting one of the opening (230) or a pipe connected to the vacuum tank (130).

In an embodiment, the vacuum tank (130) is arranged between the control valve (140) and the vacuum generator (110).

In an embodiment, the control valve (140) includes a solenoid valve.

In an embodiment, the control valve (140) is connected to a pressure sensor (170).

In an embodiment, the pressure of the vacuum tank is maintained between -90 kPa and -50 kPa by the vacuum generator (i.e. relative to the surrounding atmospheric pressure).

In an embodiment, a capacity of the vacuum tank is 100 ml to 300 ml.

In an embodiment, the vacuum generator (110) is a vacuum pump.

In an embodiment, the vacuum generator (110) is an ejector.

An electrode plate absorption device (100) according to an embodiment of the present disclosure includes a vacuum generator (110), a vacuum tank (130) connected to the vacuum generator (110) through a first pipe (122) and having a pressure maintained by the vacuum generator (110), a control valve (140) connected through the vacuum tank (130) through a second pipe (124), and a plurality of vacuum pads (150) connected to the control valve (140) through a third pipe (126), wherein the control valve (140) uses the vacuum tank (130) to control a pressure of a vacuum pad (150) that absorbs a secondary battery electrode plate.

In an embodiment, the control valve (140) is connected to an opening (230) through which purge air is introduced.

In an embodiment, the control valve (140) controls the pressure of the vacuum pad (150) by selectively connecting one of the opening (230) or the second pipe (124).

In an embodiment, the vacuum generator maintains a constant operating state.

In an embodiment, the vacuum generator maintains an intermittent operating state.

In an embodiment, the electrode plate absorption device (100) further include a pressure sensor (170) connected to the third pipe (126) and configured to measure the pressure of the vacuum pad (150).

In an embodiment, the control valve includes a first control valve (542) and a second control valve (544), the first control valve (542) is connected to a first set of vacuum pads (552) among the vacuum pads, and the second control valve (544) is connected to a second set of vacuum pads (554) among the vacuum pads.

In an embodiment, the first set of vacuum pads (552) and the second set of vacuum pads (554) are different from each other.

In an embodiment, the vacuum tank (130) has a variable volume.

In an embodiment, a diameter of the vacuum tank is greater than each of a diameter of the second pipe and a diameter of the third pipe.

Features of one embodiment or aspect may be combined or used with features of another embodiment or aspect.

At least some of the above and other features of the invention are set out in the claims.

### BRIEF DESCRIPTION OF DRAWINGS

The following drawings attached to the present specification illustrate embodiments of the present disclosure, and further describe aspects and features of the present disclosure together with the detailed description of the present disclosure. Thus, the present disclosure should not be construed as being limited to the drawings:

    FIG. 1 illustrates a configuration diagram showing an electrode plate absorption device according to an embodiment of the present disclosure;

    FIG. 2 illustrates a cross-sectional view showing a pressure control module according to an embodiment of the present disclosure;

    FIG. 3 illustrates a cross-sectional view showing air flow for electrode plate absorption of the pressure control module according to an embodiment of the present disclosure;

    FIG. 4 illustrates a cross-sectional view showing air flow for electrode plate separation of the pressure control module according to an embodiment of the present disclosure;

    FIG. 5 illustrates a configuration of an electrode plate absorption device configured to control vacuum pads in which a plurality of control valves are classified in the same number;

    FIG. 6 illustrates a configuration of an electrode plate absorption device configured to control vacuum pads in which a plurality of control valves are classified in different numbers;

    FIG. 7 illustrates a configuration of an electrode plate absorption device configured to control vacuum pads in which a plurality of control valves are classified in the same number;

    FIG. 8 illustrates a configuration of an electrode plate absorption device including a plurality of vacuum tanks connected to vacuum pads classified in the same number; and

    FIG. 9 illustrates a configuration of an electrode plate absorption device including a plurality of vacuum tanks connected to vacuum pads classified in different numbers.

DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical aspects and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified. The terms used in the present specification are for describing embodiments of the present disclosure and are not intended to limit the present disclosure.

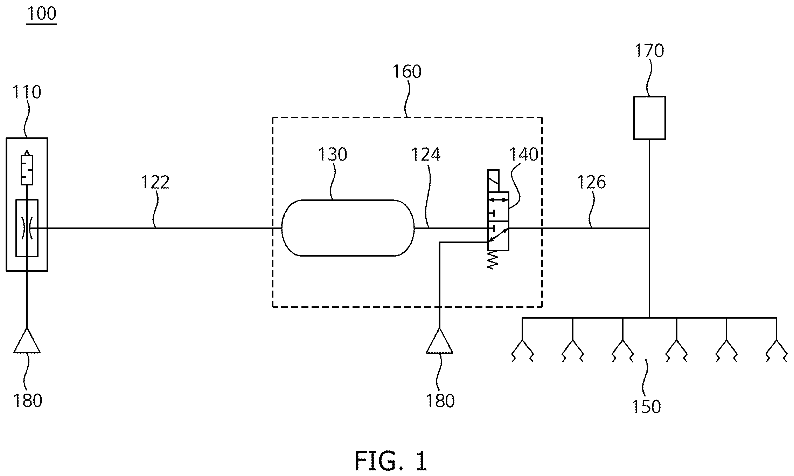

FIG. 1 schematically illustrates a configuration diagram showing an electrode plate absorption device according to an embodiment of the present disclosure.

Referring to FIG. 1, an electrode plate absorption device 100 according to an embodiment of the present disclosure may include a vacuum generator 110, pipes 122, 124, and 126, a pressure control module 160, a vacuum pad 150, a pressure sensor 170, and a purge air part 180. The pressure control module 160 (e.g., a pressure controller) may include a vacuum tank 130 and a control valve 140.

The vacuum generator 110 may be a device for generating a vacuum. The vacuum generator 110 may generate a vacuum by using compressed air or electricity. In a case where the vacuum is generated by the vacuum generator 110, the pressure of the vacuum pad 150 connected to the vacuum generator 110 may be lowered and the vacuum pad 150 may absorb an electrode plate (e.g., the vacuum pad 150 may stably hold by adsorption or vacuum-suction an electrode plate to be transferred and stacked during manufacturing of a stacked structure of a secondary battery).

In an embodiment, the vacuum generator 110 may correspond to a vacuum pump or an ejector. In a case where the vacuum generator 110 is a vacuum pump, the air intake amount may be relatively large. The vacuum pump may include, e.g., a fan-driven pump or a mechanical pump. The mechanical pump may correspond to, e.g., a piston pump, a membrane pump, a vane pump, or a root pump. In a case where the vacuum generator 110 is an ejector, the ejector may be smaller in size than the vacuum pump.

In general, during the operation of a vacuum generator, foreign materials may be scattered by the air discharged by the vacuum generator, and thus, the vacuum generator needs to be arranged spaced apart from the electrode plate (e.g., spaced apart from a vacuum pad that absorbs an electrode plate to be transferred for stacking). However, in a case where the vacuum generator is arranged spaced apart from the electrode plate, it may not be easy to control the vacuum required to absorb the electrode plate.

In contrast, according to an embodiment of the present disclosure, instead of the vacuum generator 110, the vacuum tank 130 and the control valve 140 are arranged adjacent to the electrode plate (e.g., adjacent to a vacuum pad that absorbs an electrode plate to be transferred for stacking), thereby making it easy to control the electrode plate absorption without scattering of foreign materials. For example, the pipe length of the control valve 140 of the vacuum tank 130 and the vacuum pad that absorbs the electrode plate may be designed to be 0.5 m or less.

The vacuum generator 110 may be constantly (e.g., continuously) operated. In a case where the vacuum generator 110 is constantly operated, the vacuum state of the vacuum tank 130 may be maintained (e.g., continuously). In some embodiments, the vacuum generator 110 may be intermittently operated. In a case where the vacuum generator 110 is intermittently operated, the vacuum state of the vacuum tank 130 may be maintained (e.g., reached or provided) in a case when a vacuum state is required.

The pressure control module 160 may include the vacuum tank 130 and the control valve 140. The vacuum tank 130 may be connected to the vacuum generator 110 through a first pipe 122. The pressure of the vacuum tank 130 may be maintained by the vacuum generator 110. The vacuum tank 130 may maintain the internal pressure at (-90) kPa to (-50) kPa by the vacuum generator 110. The vacuum tank 130 may be arranged between the control valve 140 and the vacuum generator 110.

The vacuum tank 130 may have a variable volume. In a case where the volume of the vacuum tank 130 is large, a larger number of vacuum pads may be absorbed. In a case where the volume of the vacuum tank 130 increases, the capacity of the vacuum tank 130 may be 100 ml to 300 ml. The vacuum tank 130 does not have a pressure control function on its own, and the pressure of the vacuum tank 130 may be manually controlled by the vacuum generator 110 and the control valve 140 connected to the vacuum tank 130 (e.g., the pressure control function of the vacuum tank 130 may be external to the vacuum tank 130).

A conductance increase effect may be generated by the vacuum tank 130. To shorten the absorption time of the vacuum pad 150, the conductance of a pipe (e.g., a vacuum pipe) has to be increased. For example, as the diameter of the pipe increases, the fluid friction decreases and the conductance increases. Since the vacuum tank 130 may be assumed to be the pipe with the largest diameter in the electrode plate absorption device 100, the vacuum tank 130 itself may have a conductance increasing effect.

A conductance C of a single circular pipe is given by the following Formula 1, where r = pipe radius, η = fluid viscosity coefficient, L = pipe length, and p = pipe mean pressure.

[Formula 1]

$$C = \frac{\pi r^4}{8\eta L} p$$

A combined conductance of a series-connected pipes is equal to the reciprocal of the sum of the reciprocals of individual values, as given by the following Formula 2.

[Formula 2]

$$C = \left(\frac{1}{C_1} + \frac{1}{C_2}\right)^{-1}$$

Comparing a general pipe configuration (e.g., inner diameter 5 mm, length 500 mm) with a combination of the vacuum tank 130 (e.g., capacity: 200 ml, inner diameter of vacuum tank 50 mm, length 100 mm) and a pipe connected to the vacuum tank 130 (inner pipe diameter 5 mm, length 400 mm) according to an embodiment of the present disclosure, the conductance of the combination of the vacuum tank 130 and the pipe increases due to the effect of the large inner diameter of the vacuum tank 130. This may shorten the vacuum absorption time by increasing the conductance of the entire pipe system (i.e., combined conductance of the vacuum tank 130 and the pipes).

The control valve 140 may be connected to the vacuum tank 130 through a second pipe 124. The control valve 140 may control the pressure of the vacuum tank 130.

The vacuum pad 150 may be configured to absorb the electrode plate (i.e., the electrode plate to be transferred and stacked). The vacuum pad 150 may be connected to the control valve 140 through a third pipe 126. The vacuum pad 150 may absorb and separate the electrode plate by the pressure control of the control valve 140, e.g., the control valve 140 may be connected between the vacuum pad 150 and the vacuum tank 130. A plurality of vacuum pads 150 may be provided to simultaneously absorb a plurality of electrode plates.

A pressure sensor 170 may be connected to the control valve 140. The pressure sensor 170 may detect the pressure controlled by the control valve 140. In some embodiments, the pressure sensor 170 may be connected to the vacuum pad 150 through the third pipe 126. The pressure sensor 170 may measure the pressure applied to the vacuum pad 150.

The purge air part 180 (e.g., a purger) may be connected to the vacuum generator 110 and/or the control valve 140. The purge air part 180 may be configured to separate the electrode plate from the vacuum pad 150. The purge air part 180 may suck in outside air. In a case where air is sucked by the purge air part 180, the vacuum pressure of the vacuum pad 150 may be lowered, and thus, the electrode plate may be separated from the vacuum pad 150.

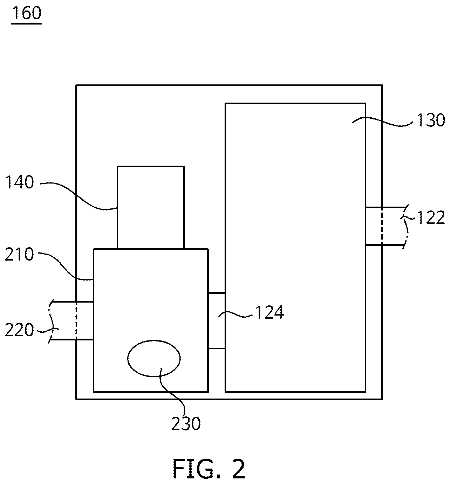

FIG. 2 schematically illustrates a cross-sectional view showing an enlarged view of the pressure control module 160 according to an embodiment of the present disclosure.

Referring to FIGS. 1 and 2, the pressure control module 160 may be connected to the vacuum generator 110, e.g., the vacuum tank 130 in the pressure control module 160 may be connected to the vacuum generator 110 via the first pipe 122. Referring to FIGS. 1 and 2, the vacuum generator 110 may be configured to be connected to an extension pipe. The pressure of the vacuum tank 130 in the pressure control module 160 may be maintained by the vacuum generator 110. The pressure of the vacuum tank 130 may be controlled by the control valve 140 connected through the second pipe 124. The second pipe 124 may be arranged inside a pipe housing 210.

An electrode plate absorption part 220 may absorb the electrode plate by the pressure control of the control valve 140. For example, the electrode plate absorption part 220 may be configured to be connected to an extension pipe, e.g., the third pipe 126. The extension pipe connected to the electrode plate absorption part 220 may be connected to the vacuum pad, e.g., the third pipe 126 may be arranged between the electrode plate absorption part 220 and the vacuum pad 150.

An opening 230 may be configured to allow purge air to be introduced, e.g., the opening 230 may be arranged in the pressure control module 160. The opening 230 may be connected to the control valve 140. The pipe connecting the opening 230 to the control valve 140 may be included inside the pipe housing 210. In a case where the opening 230 is opened by the control valve 140, purge air may be introduced into the opening 230 (e.g., from the purge air part 180). In a case where the purge air is introduced, the pressure of the electrode plate absorption part 220 may be lowered, and thus, the electrode plate may be separated from the vacuum pad.

The pipe housing 210 may include pipes connected to the pressure control module 160, e.g., the second pipe 124 and the pipe connecting the control valve 140 to the electrode plate absorption part 220 and to the opening 230. For example, referring to FIGS. 1 and 2, the pipe housing 210 may be arranged between the vacuum tank 130 and the third pipe 126.

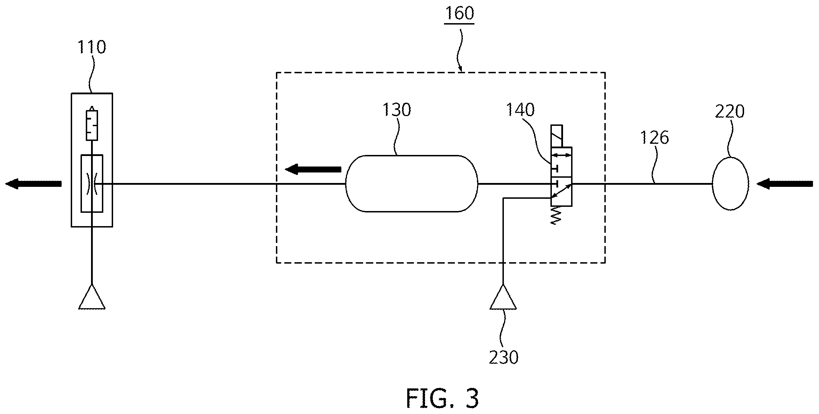

FIG. 3 schematically illustrates a cross-sectional view showing air flow for electrode plate absorption of the pressure control module 160 according to an embodiment of the present disclosure.

Referring to FIGS. 1 and 3, to absorb an electrode plate, the pressure control module 160 may control the vacuum generator 110 to generate a vacuum. The vacuum generator 110 may exhaust air to the outside. The vacuum generator 110 may set the vacuum tank 130 at a vacuum state by discharging air to the outside. The vacuum state of the vacuum tank 130 may be controlled by the control valve 140. Due to the control valve 140, the electrode plate absorption part 220 may suck in air by using the vacuum state of the vacuum tank 130. In a case where the control valve 140 is selected to close the opening 230 and open the pipe to the vacuum generator 110, air may be sucked in by using the vacuum state of the vacuum tank 130. During this process, the pressure of the vacuum tank 130 may be manually controlled by the vacuum generator 110 or the control valve 140.

The electrode plate absorption part 220 may suck in air and absorb the electrode plate. The electrode plate absorption part 220 is connected to an extension pipe, e.g., the third pipe 126 in FIG. 1. The electrode plate may be absorbed on the vacuum pad 150 (FIG. 1) connected to the electrode plate absorption part 220. A plurality of vacuum pads may be provided. Accordingly, the pressure control module 160 may absorb a plurality of electrode plates.

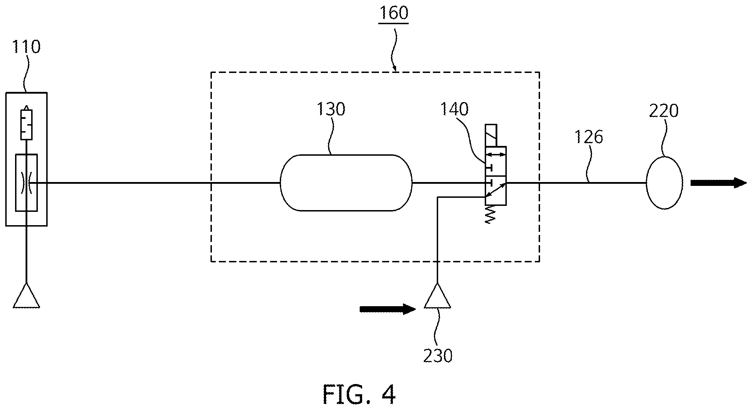

FIG. 4 schematically illustrates a cross-sectional view showing air flow for electrode plate separation of the pressure control module 160 according to an embodiment of the present disclosure.

Referring to FIGS. 1 and 4, purge air may be introduced into the opening 230 of the pressure control module 160 so as to separate the electrode plate. The pressure of the pressure control module 160 may be controlled by the control valve 140. The control valve 140 may control the pressure of the pressure control module 160 by selectively connecting either to the opening 230 or to the pipe (e.g., the second pipe 124) connected to the vacuum tank 130.

In a case where the control valve 140 is selected to close the opening 230 and open the pipe connected to the vacuum tank 130, the electrode plate absorption part 220 may suck in air (e.g., oriented toward the vacuum tank 130 along the arrows in FIG. 3) and absorb the electrode plate by the vacuum generated by the vacuum tank 130 (FIG. 3). The electrode plate absorption part 220 may be connected to an extension pipe. The electrode plate absorption part 220 may be connected to the vacuum pad 150, e.g., through the extension pipe.

As illustrated in FIG. 4, in a case where the control valve 140 is selected to open the opening 230 and close the pipe connected to the vacuum tank 130, air may be introduced into the opening 230. In a case where the air is introduced into the opening 230, the air may be discharged from the electrode plate absorption part 220 (e.g., along the arrow in FIG. 4) or the pressure of the electrode plate absorption part 220 may be lowered. This may cause the electrode plate to be separated from the electrode plate absorption part 220. The electrode plate absorption part 220 may be connected to an extension pipe, and may be connected to the vacuum pad 150. The electrode plate absorbed on the vacuum pad 150 (FIG. 1) may be separated from the electrode plate absorption part 220 due to air suction of the opening 230. During this process, the pressure of the vacuum tank 130 may be manually controlled by the vacuum generator 110 or the control valve 140.

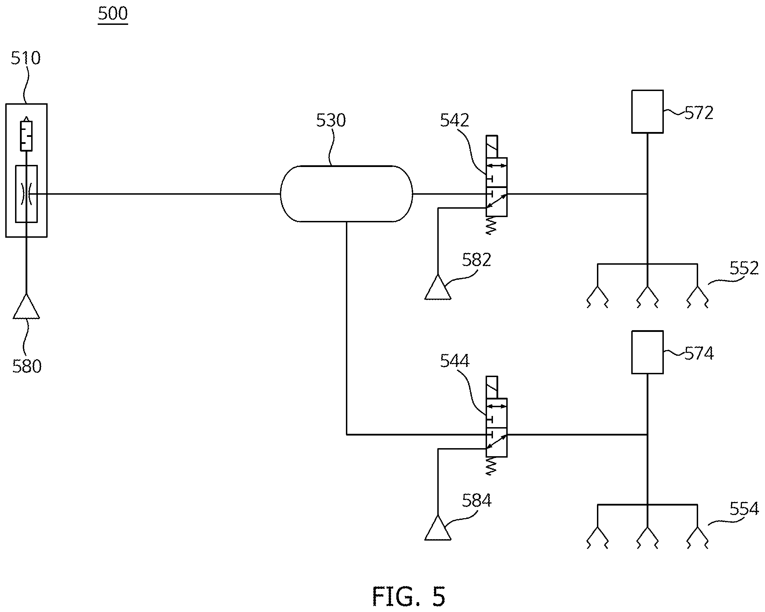

FIG. 5 schematically illustrates a configuration of an electrode plate absorption device configured to control vacuum pads in which a plurality of control valves are classified in the same number.

Referring to FIG. 5, an electrode plate absorption device 500 may generate a vacuum by a vacuum generator 510. The vacuum generator 510 may form a vacuum in a vacuum tank 530. The vacuum tank 530 may be connected to control valves 542 and 544. The pressure of the vacuum tank 530 may be controlled by the control valves 542 and 544. The control valves 542 and 544 may include a first control valve 542 and a second control valve 544, e.g., the first and second control valves 542 and 544 may be connected to the vacuum tank 530 in parallel to each other and may operate simultaneously and independently of each other.

The first control valve 542 may be connected to a first vacuum pad 552. The first vacuum pad 552 may absorb an electrode plate by the pressure control of the first control valve 542. The first control valve 542 may be connected to a first pressure sensor 572. The first pressure sensor 572 may measure the pressure controlled by the first control valve 542.

The second control valve 544 may be connected to a second vacuum pad 554. The second vacuum pad 554 may absorb an electrode plate by the pressure control of the second control valve 544. The second control valve 544 may be connected to a second pressure sensor 574. The second pressure sensor 574 may measure the pressure controlled by the second control valve 544.

The vacuum pads 552 and 554 may be provided. The vacuum pads 552 and 554 may have a plurality of sets. The vacuum pads 552 and 554 may be classified into sets, and each set may be controlled by each control valve. For example, as illustrated in FIG. 5, the vacuum pads 552 and 554 may be composed of six vacuum pads. The first control valve 542 may control the pressure of three first vacuum pads 552, i.e., the pressure of a first set of vacuum pads. The second control valve 544 may control the pressure of three second vacuum pads 554, i.e., the pressure of a second set of vacuum pads. The vacuum pads in each set may be controlled at different pressures.

Purge air parts 580, 582, and 584 may be connected to the vacuum generator 550, the first control valve 542, and the second control valve 544, respectively.

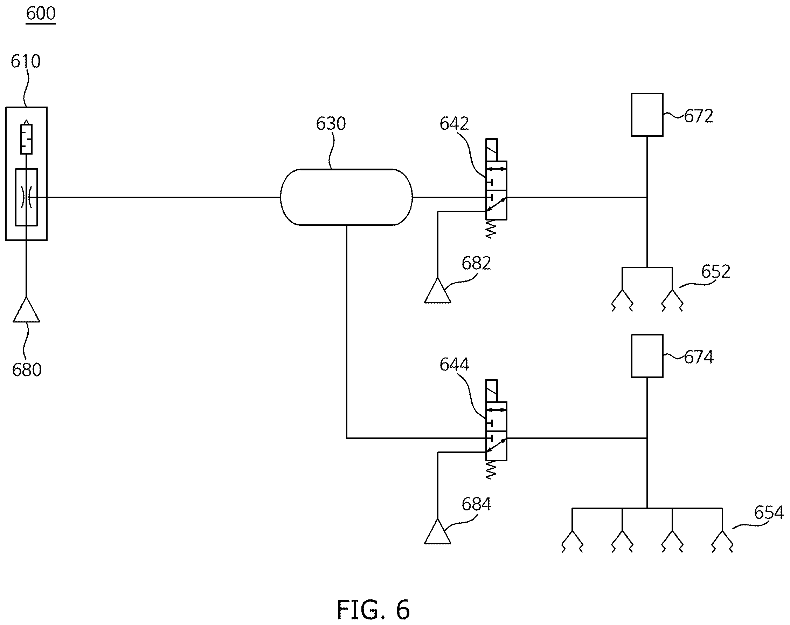

FIG. 6 schematically illustrates a configuration of an electrode plate absorption device configured to control vacuum pads in which a plurality of control valves are classified in different numbers.

Referring to FIG. 6, an electrode plate absorption device 600 may generate a vacuum by a vacuum generator 610. The vacuum generator 610 may form a vacuum in a vacuum tank 630. The vacuum tank 630 may be connected to control valves 642 and 644. The pressure of the vacuum tank 630 may be controlled by the control valves 642 and 644. The control valves 642 and 644 may include a first control valve 642 and a second control valve 644.

The first control valve 642 may be connected to a first vacuum pad 652. The first vacuum pad 652 may absorb an electrode plate by the pressure control of the first control valve 642. The first control valve 642 may be connected to a first pressure sensor 672. The first pressure sensor 672 may measure the pressure controlled by the first control valve 642.

The second control valve 644 may be connected to a second vacuum pad 654. The second vacuum pad 654 may absorb an electrode plate by the pressure control of the second control valve 644. The second control valve 644 may be connected to a second pressure sensor 674. The second pressure sensor 674 may measure the pressure controlled by the second control valve 644.

The vacuum pads 652 and 654 may be provided. The vacuum pads 652 and 654 may have a plurality of sets. The vacuum pads 652 and 654 may be classified into sets, and each set may be controlled by each control valve. For example, as illustrated in FIG. 6, the vacuum pads 652 and 654 may be composed of six vacuum pads. The first control valve 642 may control the pressure of two first vacuum pads 652, i.e., the pressure of a first set of vacuum pads. The second control valve 644 may control the pressure of four second vacuum pads 654, i.e., the pressure of a second set of vacuum pads. The vacuum pads in each set may be controlled at different pressures, and, for example, independently of each other.

Purge air parts 680, 682, and 684 may be connected to the vacuum generator 650, the first control valve 642, and the second control valve 644, respectively.

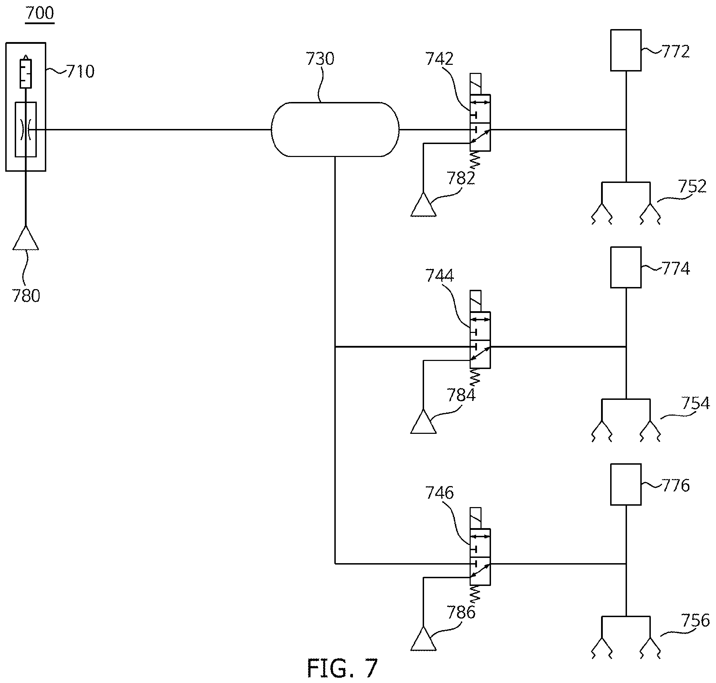

FIG. 7 schematically illustrates a configuration of an electrode plate absorption device configured to control vacuum pads in which a plurality of control valves are classified in the same number.

Referring to FIG. 7, an electrode plate absorption device 700 may generate a vacuum by a vacuum generator 710. The vacuum generator 710 may form a vacuum in a vacuum tank 730. The vacuum tank 730 may be connected to control valves 742, 744, and 746. The pressure of the vacuum tank 730 may be controlled by the control valves 742, 744, and 746. The control valves 742, 744, and 746 may include a first control valve 742, a second control valve 744, and a third control valve 746.

The first control valve 742 may be connected to a first vacuum pad 752. The first vacuum pad 752 may absorb an electrode plate by the pressure control of the first control valve 742. The first control valve 742 may be connected to a first pressure sensor 772. The first pressure sensor 772 may measure the pressure controlled by the first control valve 742.

The second control valve 744 may be connected to a second vacuum pad 754. The second vacuum pad 754 may absorb an electrode plate by the pressure control of the second control valve 744. The second control valve 744 may be connected to a second pressure sensor 774. The second pressure sensor 774 may measure the pressure controlled by the second control valve 744.

The third control valve 746 may be connected to a third vacuum pad 756. The third vacuum pad 756 may absorb the electrode plate by the pressure control of the third control valve 746. The third control valve 746 may be connected to a third pressure sensor 776. The third pressure sensor 776 may measure the pressure controlled by the third control valve 746.

The vacuum pads 752, 754, and 756 may be provided. The vacuum pads 752, 754, and 756 may have a plurality of sets. The vacuum pads 752, 754, and 756 may be classified into sets, and each set may be controlled by each control valve. For example, as illustrated in FIG. 7, the vacuum pads 752, 754, and 756 may be composed of six vacuum pads. The first control valve 742 may control the pressure of two first vacuum pads 752, i.e., the pressure of a first set of vacuum pads. The second control valve 744 may control the pressure of two second vacuum pads 754, i.e., the pressure of a second set of vacuum pads. The third control valve 746 may control the pressure of two third vacuum pads 756, i.e., the pressure of a third set of vacuum pads. The vacuum pads in each set may be controlled at different pressures.

Purge air parts 780, 782, 784, and 786 may be connected to the vacuum generator 750, the first control valve 742, the second control valve 744, and the third control valve 746, respectively.

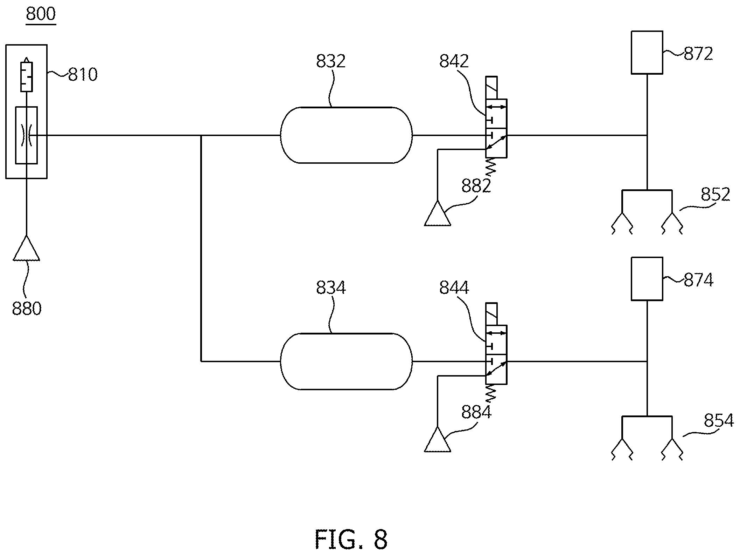

FIG. 8 schematically illustrates a configuration of an electrode plate absorption device including a plurality of vacuum tanks connected to vacuum pads classified in the same number.

Referring to FIG. 8, an electrode plate absorption device 800 may generate a vacuum by a vacuum generator 810. The vacuum generator 810 may form a vacuum in vacuum tanks 832 and 834. The vacuum tanks 832 and 834 may include a first vacuum tank 832 and a second vacuum tank 834. The pressures of the vacuum tanks 832 and 834 may be respectively controlled by control valves 842 and 844. The control valves 842 and 844 may include a first control valve 842 and a second control valve 844.

The first vacuum tank 832 may be connected to the first control valve 842. The pressure of the first vacuum tank 832 may be controlled by the first control valve 842. The first control valve 842 may be connected to a first vacuum pad 852. The first vacuum pad 852 may absorb the electrode plate by the pressure control of the first control valve 842. The first control valve 842 may be connected to a first pressure sensor 872. The first pressure sensor 872 may measure the pressure controlled by the first control valve 842.

The second vacuum tank 834 may be connected to the second control valve 844. The pressure of the second vacuum tank 834 may be controlled by the second control valve 844. The second control valve 844 may be connected to a second vacuum pad 854. The second vacuum pad 854 may absorb the electrode plate by the pressure control of the second control valve 844. The second control valve 844 may be connected to a second pressure sensor 874. The second pressure sensor 874 may measure the pressure controlled by the second control valve 844.

The vacuum pads 852 and 854 may be provided. The vacuum pads 852 and 854 may have a plurality of sets. The vacuum pads 852 and 854 may be classified into sets, and each set may be controlled by each control valve. For example, as illustrated in FIG. 8, the vacuum pads 852 and 854 may be composed of four vacuum pads. The first control valve 842 may control the pressure of two first vacuum pads 852, i.e., the pressure of a first set of vacuum pads. The second control valve 844 may control the pressure of two second vacuum pads 854, i.e., the pressure of a second set of vacuum pads. The vacuum pads in each set may be controlled at different pressures.

The capacity of each vacuum tank may be changed according to the number of vacuum pads connected to each vacuum tank. The vacuum tanks may have variable volumes.

Purge air parts 880, 882, and 884 may be connected to the vacuum generator 850, the first control valve 842, and the second control valve 844, respectively.

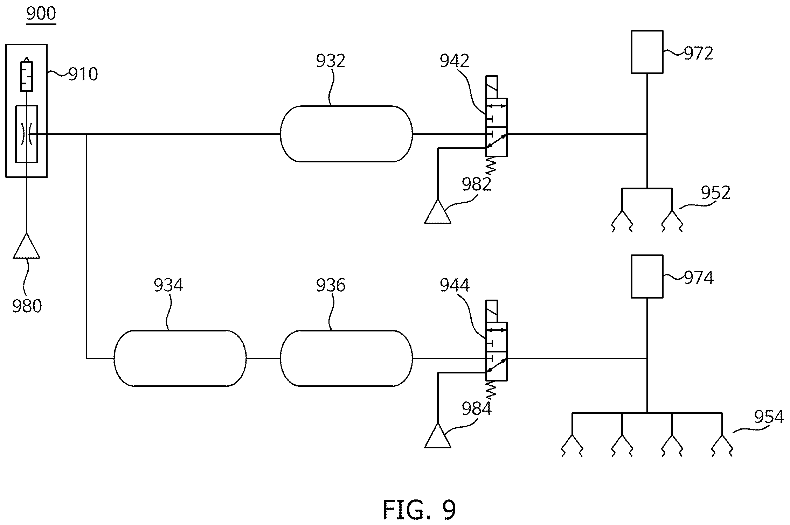

FIG. 9 schematically illustrates a configuration of an electrode plate absorption device including a plurality of vacuum tanks connected to vacuum pads classified in different numbers.

Referring to FIG. 9, an electrode plate absorption device 900 may generate a vacuum by a vacuum generator 910. The vacuum generator 910 may form a vacuum in vacuum tanks 932, 934, and 936. The vacuum tanks 932, 934, and 936 may include a first vacuum tank 932, a second vacuum tank 934, and a third vacuum tank 936. The pressure of the vacuum tanks may be controlled by the control valves 942 and 944. The control valves 942 and 944 may include a first control valve 942 and a second control valve 944. The first vacuum tank 932 may be connected to the first control valve 942. The pressure of the first vacuum tank 932 may be controlled by the first control valve 942. The first control valve 942 may be connected to a first vacuum pad 952. The first vacuum pad 952 may absorb an electrode plate by the pressure control of the first control valve 942. The first control valve 942 may be connected to a first pressure sensor 972. The first pressure sensor 972 may measure the pressure controlled by the first control valve 942.

The second vacuum tank 934 may be connected to the third vacuum tank 936 (e.g., in series). The third vacuum tank 936 may be connected to the second control valve 944 (e.g., the third vacuum tank 936 may be between the second vacuum tank 934 and the second control valve 944). The pressure of the second vacuum tank 934 and the third vacuum tank 936 may be controlled by the second control valve 944. The second control valve 944 may be connected to the second vacuum pad 954. The second vacuum pad 954 may absorb the electrode plate by the pressure control of the second control valve 944. The second control valve 944 may be connected to a second pressure sensor 974. The second pressure sensor 974 may measure the pressure controlled by the second control valve 944.

The vacuum pads 952 and 954 may be provided. The vacuum pads 952 and 954 may have a plurality of sets. The vacuum pads 952 and 954 may be classified into sets, and each set may be controlled by each control valve. For example, as illustrated in FIG. 9, the vacuum pads 952 and 954 may be composed of six vacuum pads. The first control valve 942 may control the pressure of two first vacuum pads 952, i.e., the pressure of a first set of vacuum pads. The second control valve 944 may control the pressure of four second vacuum pads 954, i.e., the pressure of a second set of vacuum pads. The vacuum pads in each set may be controlled at different pressures.

The capacity of each vacuum tank may be changed according to the number of vacuum pads connected to each vacuum tank. The vacuum tanks may have variable volumes. As illustrated in FIG. 9, instead of variably changing the capacity of the vacuum tank, the number of vacuum tanks may be increased as the number of vacuum pads connected to the vacuum tank increases.

Purge air parts 980, 982, and 984 may be connected to the vacuum generator 950, the first control valve 942, and the second control valve 944, respectively.

By way of summation and review, among the secondary battery manufacturing methods, stacking of electrode plates may involve a slower production speed (e.g., compared to winding), thereby requiring speeding up the electrode plate transport and lamination speed in order to improve the overall production speed of the stacking process. As such, it may be difficult to manufacture an electrode plate assembly for a low-capacity secondary battery (including a single positive electrode plate and a single negative electrode plate) that is continuously provided, thereby manufacturing an electrode plate assembly in a jelly roll type (i.e., a winding process) rather than a laminated type (i.e., a stacking process). However, the jelly roll-type manufacturing process performs a sequential pressing process, and thus, there is a limitation to increasing the manufacturing capacity.

Attempts have been made to perform an electrode stacking process by an electrode plate absorption method that controls vacuum absorption or destruction by turning on/off an ejector located at a certain distance or more from an electrode plate picker. However, there is a certain time delay until an ejector vacuum pressure reaches a target pressure from 0 kPa. In addition, a pipe length increases by the separation distance, which reduces the conductance of the pipe and increases vacuum arrival time. In a case where the ejector is installed close to the picker side, there is a risk of foreign materials flying due to the influence of ejector exhaust air sprayed from the ejector exhaust side. In addition, in a case where a separate pipe is connected to exhaust compressed air, the pipe configuration becomes complicated and pressure loss may occur.

In contrast, example embodiments provide an electrode plate absorption device for reducing a pipe length and an electrode plate absorption time by simultaneously providing a vacuum tank close to an electrode plate absorption portion.

According to various embodiments of the present disclosure, the electrode plate absorption device may reduce the pipe length by including the vacuum tank and the control valve.

According to various embodiments of the present disclosure, the electrode plate absorption device may increase the conductance of the entire pipe, thereby reducing the vacuum absorption time immediately after the electrode plate comes into contact with the vacuum pad and the valve is opened.

According to various embodiments of the present disclosure, the electrode plate absorption device may reduce the vacuum absorption time, thereby reducing the electrode plate transport time and enabling high-speed stacking equipment.

According to various embodiments of the present disclosure, the electrode plate absorption device includes the vacuum tank and the control valve so as to maintain the base vacuum at a constantly low level.

However, aspects and features of the present disclosure are not limited to those described above, and other aspects and features not mentioned will be clearly understood by a person skilled in the art from the detailed description of the example embodiments.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure and the claims and their equivalents, below.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

**Claims**

1.  A pressure control module (160), comprising:

    a vacuum tank (130) connected to a vacuum generator (110), the vacuum tank (130) being configured to have a pressure therein maintained by the vacuum generator (110); and
    a control valve (140) connected to the vacuum tank (130), the control valve (140) being configured to control via the vacuum tank (130) a pressure of a vacuum pad (150) that absorbs an electrode plate.

2.  The pressure control module (160) as claimed in claim 1, further comprising an opening (230) configured to introduce a purge air, the control valve (140) being connected to the opening.

3.  The pressure control module (160) as claimed in claim 2, further comprising a pipe connecting the vacuum tank (130) to the control valve (140), the control valve (140) being configured to control the pressure of the vacuum pad (150) by selectively connecting one of the opening (230) and the pipe.

4.  The pressure control module (160) as claimed in claim 2 or claim 3, wherein the vacuum tank (130) is arranged between the control valve (140) and the vacuum generator (110).

5.  The pressure control module (160) as claimed in claim 4, wherein the control valve (140) includes a solenoid valve.

6.  The pressure control module (160) as claimed in any one of the preceding claims, wherein the control valve (140) is connected to a pressure sensor (170).

7.  The pressure control module (160) as claimed in any one of the preceding claims, wherein the vacuum generator (110) is a vacuum pump.

8.  The pressure control module (160) as claimed in any one of claims 1 to 6, wherein the vacuum generator (110) is an ejector.

9.  An electrode plate absorption device (100), comprising:

    a vacuum generator (110);
    a vacuum tank (130) connected to the vacuum generator (110) through a first pipe (122), the vacuum tank (130) being configured to have a pressure maintained therein by the vacuum generator (110);
a control valve (140) connected to the vacuum tank (130) through a second pipe (124); and
vacuum pads (150) connected to the control valve (140) through a third pipe (126), the control valve (140) being configured to control through the vacuum tank (130) pressure of the vacuum pads (150) that absorb electrode plates.

10. The electrode plate absorption device (100) as claimed in claim 9, further comprising an opening (230) configured to introduce a purge air, the control valve (140) being connected to the opening (230).

11. The electrode plate absorption device (100) as claimed in claim 10, wherein the control valve (140) is configured to control the pressure of the vacuum pads (150) by selectively connecting one of the opening (230) or the second pipe (124).

12. The electrode plate absorption device (100) as claimed in any one of claims 9 to 11, further comprising a pressure sensor (170) connected to the third pipe (126) and configured to measure the pressure of the vacuum pads (150).

13. The electrode plate absorption device (500) as claimed in any one of claims 9 to 12, wherein:

    the control valve includes a first control valve (542) and a second control valve (544),
    the first control valve (542) is connected to a first set of vacuum pads (552) among the vacuum pads, and
    the second control valve (544) is connected to a second set of vacuum pads (554) among the vacuum pads.

14. The electrode plate absorption device as claimed in claim 13, wherein the first set of vacuum pads (552) and the second set of vacuum pads (554) are different from each other.

15. The electrode plate absorption device as claimed in any one of claims 9 to 14, wherein the vacuum tank (130) has a variable volume.

FIG. 1

FIG. 2

EP 4 667 171 A1

FIG. 3

FIG. 4

FIG. 5

FIG. 6

FIG. 7

FIG. 8

FIG. 9

## EP 4 667 171 A1

**EUROPEAN SEARCH REPORT**

Application Number

EP 25 17 8294

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 460 757 A1 (FEZER MASCHF ALBERT [DE]) 6 June 2012 (2012-06-06) | 1-7,9-12 | INV. B25J15/06 |
| Y | * the whole document * | 8 | B65G47/91 |
| X | WO 2010/089270 A1 (SCHMALZ J GMBH [DE]; GEISSLER DIETER [DE]) 12 August 2010 (2010-08-12) * the whole document * | 1,9, 13-15 | |
| Y | US 9 707 686 B2 (SCHMALZ J GMBH [DE]) 18 July 2017 (2017-07-18) | 8 | |
| A | * the whole document * | 1-7,9-15 | |
| A | EP 0 726 869 B1 (COMALCO ALU [AU]) 14 March 2001 (2001-03-14) * the whole document * | 1-15 | |
| A | CN 207 233 883 U (QINGDAO GUOXUAN BATTERY CO LTD) 13 April 2018 (2018-04-13) * the whole document * | 1-15 | |

**TECHNICAL FIELDS SEARCHED (IPC)**

B25J
B65G

The present search report has been drawn up for all claims

| Place of search | Date of completion of the search | Examiner |
|---|---|---|
| Munich | 29 October 2025 | Vázquez Cabello, R |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

20

## ANNEX TO THE EUROPEAN SEARCH REPORT
## ON EUROPEAN PATENT APPLICATION NO.

EP 25 17 8294

This annex lists the patent family members relating to the patent documents cited in  the above-mentioned European search report.
The members are as contained in the European Patent Office EDP file on
The European Patent Office is in no way liable for these particulars which are merely given for the purpose of information.

29-10-2025

| Patent document cited in search report | | | Publication date | Patent family member(s) | | | Publication date |
|---|---|---|---|---|---|---|---|
| EP 2460757 | A1 | | 06-06-2012 | NONE | | | |
| WO 2010089270 | A1 | | 12-08-2010 | DE | 102009008203 | B3 | 08-04-2010 |
| | | | | EP | 2393747 | A1 | 14-12-2011 |
| | | | | WO | 2010089270 | A1 | 12-08-2010 |
| US 9707686 | B2 | | 18-07-2017 | CN | 104114877 | A | 22-10-2014 |
| | | | | CN | 104114878 | A | 22-10-2014 |
| | | | | EP | 2815131 | A1 | 24-12-2014 |
| | | | | EP | 2815132 | A1 | 24-12-2014 |
| | | | | KR | 20140135194 | A | 25-11-2014 |
| | | | | KR | 20140135195 | A | 25-11-2014 |
| | | | | US | 2015017025 | A1 | 15-01-2015 |
| | | | | US | 2015052990 | A1 | 26-02-2015 |
| | | | | WO | 2013120801 | A1 | 22-08-2013 |
| | | | | WO | 2013120802 | A1 | 22-08-2013 |
| EP 0726869 | B1 | | 14-03-2001 | CA | 2173858 | A1 | 11-05-1995 |
| | | | | DE | 69426888 | T2 | 02-08-2001 |
| | | | | EP | 0726869 | A1 | 21-08-1996 |
| | | | | NO | 312626 | B1 | 10-06-2002 |
| | | | | US | 5752729 | A | 19-05-1998 |
| | | | | WO | 9512541 | A1 | 11-05-1995 |
| CN 207233883 | U | | 13-04-2018 | NONE | | | |

EPO FORM P0459